(19) Europäisches Patentamt / European Patent Office / Office européen des brevets

(11) **EP 1 906 479 A1**

(12) **EUROPEAN PATENT APPLICATION**
published in accordance with Art. 153(4) EPC

(43) Date of publication:
**02.04.2008 Bulletin 2008/14**

(21) Application number: **06768164.3**

(22) Date of filing: **13.07.2006**

(51) Int Cl.:
*H01M 8/04* (2006.01)    *H01M 8/06* (2006.01)
*H01M 8/10* (2006.01)

(86) International application number:
**PCT/JP2006/313950**

(87) International publication number:
**WO 2007/010815 (25.01.2007 Gazette 2007/04)**

(84) Designated Contracting States:
**DE**

(30) Priority: **15.07.2005 JP 2005206612**

(71) Applicants:
• **KABUSHIKI KAISHA TOSHIBA**
 **Tokyo 105-8001 (JP)**
• **TOSHIBA ELECTRONIC ENGINEERING CORPORATION**
 **Yokohama-shi, Kanagawa 235-8522 (JP)**

(72) Inventors:
• **KAWAMURA, Koichi,**
 **c/o I.P. Division**
 **Tokyo 105-8001 (JP)**

• **HASEBE, Hiroyuki,**
 **c/o I.P. Division**
 **Tokyo 105-8001 (JP)**
• **TAKAHASHI, Kenichi,**
 **c/o I.P. Division**
 **Tokyo 105-8001 (JP)**

(74) Representative: **Henkel, Feiler & Hänzel**
 **Patentanwälte**
 **Maximiliansplatz 21**
 **80333 München (DE)**

(54) **FUEL BATTERY**

(57)    A fuel battery (1) includes a fuel tank (3) containing a methanol fuel F as a liquid fuel, and an electromotive unit (fuel cell unit) (2) performing an electric generation operation by being supplied with the methanol fuel F from this fuel tank (3). The fuel tank (3) is formed by a transparent resin having methanol resistance.

## FIG. 1

EP 1 906 479 A1

**Description**

Technical Field

The present invention relates to a fuel battery using a methanol fuel.

Background Art

In recent years, an attempt to use a fuel battery as a power supply of portable electronic devices is made so that the portable electronic devices such as a notebook computer and a cellular phone can be used for a long time without charging. The fuel battery has characteristics in which it is possible to generate electricity only by supplying fuel and air, and it is possible to generate electricity continuously and for a long time as long as the fuel is supplied. Accordingly, it can be said that the fuel battery is an extremely advantageous system as the power supply of the portable electronic devices if downsizing of the fuel battery is possible.

A direct methanol fuel cell (DMFC) using a methanol fuel with high energy density can be downsized, and further, a handling of the fuel is easy, and therefore, it appears promising as the power supply for the portable devices. As supply methods of a liquid fuel in the DMFC, active methods such as a gas supply type and a liquid supply type and so on, and a passive method such as an internal vaporization type in which the liquid fuel in a fuel tank is vaporized inside a battery to supply to a fuel electrode are known. Among them, the active method is prospective as the power supply of the notebook computer and so on, because the active method can make the DMFC high-powered (super-powered).

The passive method such as the internal vaporization type is particularly advantageous for the downsizing of the DMFC because an active fuel transfer means such as a fuel pump is not necessary. For example, a passive type DMFC is described in Patent Document 1 and Patent Document 2, in which a fuel permeating layer holding the liquid fuel, and a fuel vaporization layer diffusing a vaporized component of the liquid fuel held within the fuel permeating layer to supply to the fuel electrode are included. The passive type DMFC is prospective as the power supply of small-sized portable devices such as a portable audio player and the cellular phone.

In the passive type DMFC, a research and approach for a practical use of the DMFC using a pure methanol as the liquid fuel are in progress so as to realize an improvement of output characteristics and further downsizing thereof. The liquid fuel such as the pure methanol is held in the fuel tank provided inside the passive type DMFC, and is supplied to the fuel electrode by directly being vaporized from the fuel tank. The liquid fuel in the fuel tank is consumed in accordance with a power generation operation, and therefore, a necessity arises to fill the liquid fuel into the fuel tank from outside. It is proposed that at least a part of the fuel tank is constituted by a transparent material to check a filling timing of the liquid fuel (refer to Patent References 3, 4).

As stated above, in the passive type DMFC, it is examined to use the pure methanol as the liquid fuel. Accordingly, the transparent material constituting the fuel tank is necessary to have resistance for a high-concentration liquid fuel represented by the pure methanol. As the transparent material, an acrylic resin, a polycarbonate resin, a polyvinyl chloride resin, and so on are generally used. However, these conventional transparent resins are inferior in methanol resistance, and a possibility in which dissolution, a stress lacking, and so on occur is large when they are applied to the fuel tank of the DMFC. Consequently, there is a disadvantage in which the conventional transparent resins cannot endure the use of the passive type DMFC.

On the other hand, even if the resin material is superior in the methanol resistance, when it is inferior in the transparency, original characteristics of the transparent fuel tank is spoiled because a visual observation of the remaining amount of the methanol fuel from outside becomes impossible. For example, a general olefin based resin such as a polyethylene resin and a polypropylene resin has a certain degree of methanol resistance, but on the other hand, have poor transparency and mechanical strength, and therefore, it is not adequate to a composing material of the transparent fuel tank of the DMFC.

Patent Reference 1: JP-B2 3413111 (Patent Publication)
Patent Reference 2: JP-A 2004-171844 (KOKAI)
Patent Reference 3: JP-A 2001-093551 (KOKAI)
Patent Reference 4: JP-A 2004-335331 (KOKAI)

Disclosure of the Invention

An object of the present invention is to provide a fuel battery including a fuel tank showing resistance for a methanol fuel in various concentrations, and capable of finely performing a visual observation of a remaining amount of the methanol fuel from outside.

A fuel battery according to an aspect of the present invention includes: a fuel tank containing a methanol fuel as a liquid fuel, and formed by a transparent resin having methanol resistance; and an electromotive unit performing a power generation operation by being supplied with the methanol fuel from the fuel tank.

Brief Description of Drawings

[FIG. 1] FIG. 1 is a sectional view showing a conf iguration of a fuel battery according to an embodiment of the present invention.
[FIG. 2] FIG. 2 is a plan view showing a fuel tank of the fuel battery shown in FIG. 1.
[FIG. 3] FIG. 3 is a side view showing the fuel tank of the fuel battery shown in FIG. 1.

Explanation of Numerals and Symbols

1... Passive type DMFC, 2... Fuel cell unit, 3... Fuel tank, 4 ... Gas permselective membrane, 5... Anode catalyst layer, 6... Anode gas diffusion layer, 7... Cathode catalyst layer, 8... Cathode gas diffusion layer, 9... Electrolyte membrane, 14... Tank portion in container shape, 15... Support post, 16... Mounting portion of coupling mechanism, 18... Prism

Best Mode for Carrying out the Invention

Hereinafter, embodiments of the present invention are described with reference to the drawings. Note that the embodiments of the present invention will be described based on the drawings in the following, but these drawings are provided only for an illustrative purpose and by no means are intended to limit the present invention.

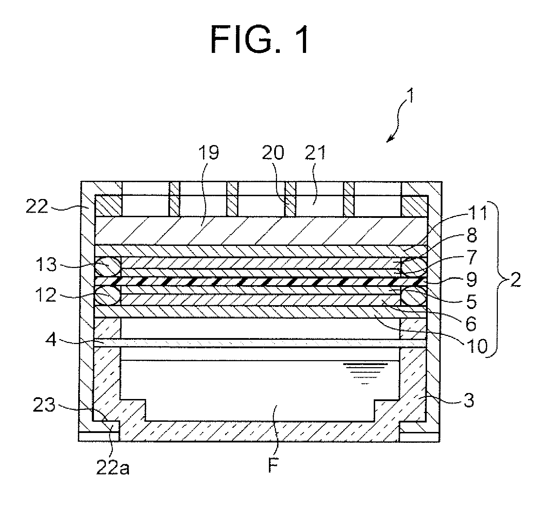

FIG. 1 is a sectional view showing a configuration of a passive type DMFC according to an embodiment of the present invention. An internal vaporization method is applied to a passive type DMFC 1 shown in FIG. 1, and the DMFC 1 is mainly constituted by a fuel cell unit 2 constituting an electromotive unit, a fuel tank 3 supplying a liquid fuel (a methanol fuel) to the fuel cell unit 2, and a gas permselective membrane 4 interposed between the fuel cell unit 2 and the fuel tank 3.

The fuel cell unit 2 has a membrane electrode assembly (MEA) constituted by an anode (a fuel electrode) having an anode catalyst layer 5 and an anode gas diffusion layer 6, a cathode (an oxidant electrode/air electrode) having a cathode catalyst layer 7 and a cathode gas diffusion layer 8, and a proton (hydrogen ion) conductive electrolyte membrane 9 sandwiched between the anode catalyst layer 5 and the cathode catalyst layer 7.

As a catalyst contained in the anode catalyst layer 5 and the cathode catalyst layer 7, for example, single elements of the platinum group such as Pt, Ru, Rh, Ir, Os, Pd, an alloy containing the elements of platinum group, and so on can be cited. It is preferable that Pt-Ru, Pt-Mo and so on having strong resistance for methanol and carbon monoxide are used for the anode catalyst layer 5. It is preferable that Pt, Pt-Ni and so on are used for the cathode catalyst layer 7. The catalyst may be either a supported catalyst using a conductive supported body such as a carbon material, or a non-supported catalyst.

As the proton conductive material constituting the electrolyte membrane 9, for example, a fluorine based resin (Nafion (a trade name, manufactured by Dupont Co., Ltd.), Flemion (a trade name, manufactured by Asahi Glass Co., Ltd.), and so on) such as a perfluoro sulfonic acid polymer having a sulfonic acid group, a hydrocarbon based resin having the sulfonic acid group, an inorganic substance such as a tungstic acid, a phosphotungstic acid, and so on can be cited. The composing materials of the proton conductive electrolyte membrane 9 are not limited to the above.

The anode gas diffusion layer 6 laminated with the anode catalyst layer 5 plays a role to supply the fuel to the anode catalyst layer 5 uniformly, and at the same time, has a role as a current collector of the anode catalyst layer 5. On the other hand, the cathode gas diffusion layer 8 laminated with the cathode catalyst layer 7 plays a role to supply an oxidant to the cathode catalyst layer 7 uniformly, and at the same time, has a role as a current collector of the cathode catalyst layer 7.

An anode conductive layer 10 is laminated on the anode gas diffusion layer 6, and a cathode conductive layer 11 is laminated on the cathode gas diffusion layer 8. These conductive layers 10, 11 are constituted by a mesh, a porous film, a thin film, and so on composed of, for example, a conductive metal material such as gold. Rubber o-rings 12, 13 are respectively interposed between the electrolyte membrane 9, the anode conductive layer 10, and the cathode conductive layer 11. Fuel leakage and oxidant leakage from the fuel cell unit (membrane electrode assembly) 2 are prevented by these rubber o-rings 12, 13.

A methanol fuel F is held in the fuel tank 3 as a liquid fuel. Methanol solutions in various concentrations and a pure methanol are used as the methanol fuel F. The methanol fuel F is accordingly selected in accordance with the constitution, the characteristics, and so on of the passive type DMFC 1. The methanol fuel F is composed of the methanol solution with a methanol concentration of, for example, 10% or more and less than 100%, and further the pure methanol.

The fuel tank 3 is disposed at the anode (the fuel electrode) side of the fuel cell unit (membrane electrode assembly) 2. The fuel tank 3 has a box-shaped container holding the methanol fuel F, and a plane facing the anode (the fuel electrode) of this box-shaped container is opened. The gas permselective membrane 4 is provided between the opening portion of the fuel tank 3 and the fuel cell unit 2. The methanol fuel F is supplied to the fuel cell unit 2 via the opening portion of the fuel tank 3 and the gas permselective membrane 4.

The gas permselective membrane 4 is a gas-liquid separation membrane permeating only a vaporized component of the methanol fuel F and not permeating a liquid component. As a composing material of the gas permselective membrane 4, for example, a fluorine resin such as polytetrafluoroethylene can be cited. Only the vaporized component of the methanol fuel F is supplied to the fuel cell unit 2 via the gas permselective membrane 4. The vaporized component of the methanol fuel F means an air-fuel mixture composed of the vaporized component of the methanol and a vaporized component of water when the methanol solution is used, and the vaporized component of the methanol when the pure methanol is used.

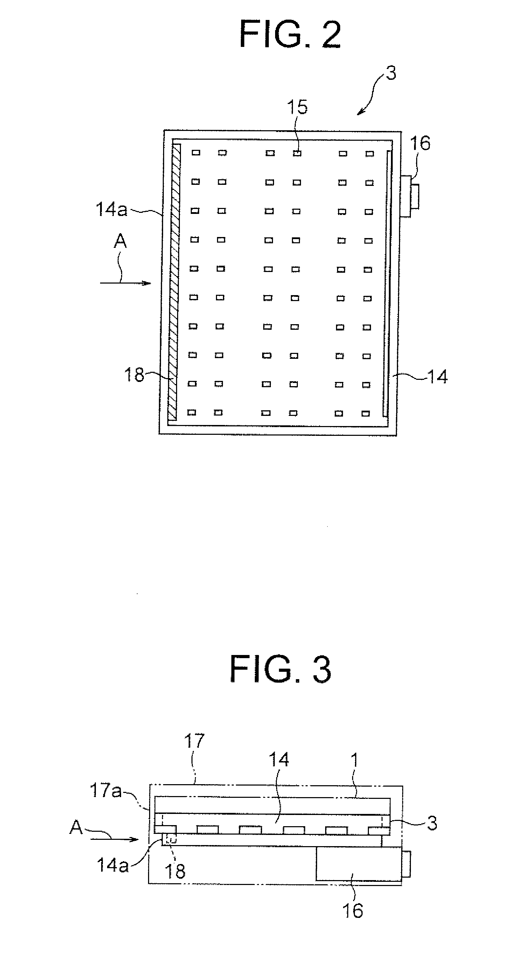

The fuel tank 3 containing the methanol fuel F is formed by a transparent resin having methanol resistance. FIG. 2 and FIG. 3 show a configuration example of the fuel tank 3. The fuel tank 3 has a tank portion 14 constituted by the box-shaped container of which upper surface is opened, plural support posts 15 stuck up in the tank portion 14, and a mounting portion 16 of a coupling mechanism (a coupling mechanism with a fuel cartridge) provided at a lower surface of the tank portion 14. All over the box-shaped container of the tank portion 14 is formed by the transparent resin having the methanol resistance. Further, the whole fuel tank 3 including the support posts 15 and the mounting portion 16 of the coupling mechanism in addition to the tank portion 14 is integrally formed by the transparent resin having the methanol resistance.

As stated above, the fuel tank 3 is formed by the transparent resin having the methanol resistance, and thereby, it be comes possible to finely keep durability and reliability for the methanol fuel F. Further, according to the fuel tank 3 in which the whole tank is formed by the transparent resin having the methanol resistance, it becomes possible to surely perform the visual observation of the remaining amount of the methanol fuel F inside thereof from outside.

It is preferable that the methanol resistance of the transparent resin being the composing material of the fuel tank 3 satisfies conditions in which a rate of mass change is 0.3% or less, a rate of length change is 0.5% or less, a rate of thickness change is 0.5% or less in an immersion test of the pure methanol based on "a chemical resistance test method for plastic" according to JIS K7114. If the values of the respective rate of changes exceed the above-stated values, there is a possibility in which dissolution, a stress lacking, and so on may occur at the fuel tank 3 when the methanol fuel F is held in the fuel tank 3 to be put into practical use. Accordingly, the practical durability and reliability of the fuel tank 3 in which the methanol fuel F is held cannot be maintained.

The rate of mass change, the rate of length change, and the rate of thickness change in the immersion test of the pure methanol of the transparent resin are measured as stated below. At first, a plate of 30 mm x 30 mm x thickness 2 mm is prepared as a specimen. A mass (M1), a length (L1), and a thickness (T1) of the above-stated specimen before the test are measured. Next, the specimen is completely immersed in a test solution (a pure methanol with a concentration of 99.8%) at 23°C ± 2°C, and it is left at rest for seven days while keeping the above-stated temperature. After that, the specimen is pulled out of the test solution, rinsed in water, moisture adhered to a surface of the specimen is wiped off, and thereafter, a mass (M2), a length (L2), and a thickness (T2) after the test are measured. The length (L1, L2) is an average value of lengths of the specimen in a longitudinal direction and a lateral direction. The thickness (T1, T2) is an average value of values in which thickness of five places of a center portion and respective corner portions (5 mm inside from edges) of the specimen are measured.

A rate of mass change M, a rate of length change L, and a rate of thickness change T are calculated based on the following expression (1), expression (2), and expression (3) from the mass (M1), length (L1), thickness (T1) before the test of the specimen and the mass (M2), length (L2), thickness (T2) after the test of the specimen.

$$M = \{(M2 - M1) \: / \: M1\} \times 100(\%) \qquad \ldots (1)$$

$$L = \{(L2 - L1) \: / \: L1\} \times 100(\%) \qquad \ldots (2)$$

$$T = \{(T2 - T1) \: / \: T1\} \times 100(\%) \qquad \ldots (3)$$

**EP 1 906 479 A1**

It is preferable that a light transmittance is 85% or more in a light transmittance measurement test based on "an optical characteristics test method for plastic" according to JISK7105-1981 as for the transparency of the transparent resin. When the light transmittance is less than 85%, the visibility of the fuel remaining amount in the fuel tank 3 deteriorates even if the composing material of the fuel tank 3 has the methanol resistance as stated above. Consequently, the original characteristic of the fuel tank 3 composed of the transparent resin, namely, the characteristic in which the remaining amount of the methanol fuel F in the fuel tank 3 is checked by the visual observation from outside is spoiled.

The light transmittance measurement test of the transparent resin is performed by using an integrating-sphere light transmittance measurement device. At first, a plate of 50 mm x 50 mm is prepared as a specimen. A plate thickness is an original thickness, and the number of the specimens is three pieces. A standard white plate is attached to the device, an indicator of the device is set at 100 (T1), and an incident light amount is adjusted. The specimens are attached while the standard white plate is being attached, and a total transmitted light amount (T2) is measured. A scattered light amount (T3) of the device is measured while the standard white plate and the specimens are detached and a light trap is attached. A scattered light amount (T4) by the device and the specimens is measured under a state in which the specimens are attached while the light trap is being attached.

A total light transmittance Tt, a diffuse transmittance Td, a parallel light transmittance Tp are asked based on the following expressions from the above-stated respective measurement values (T1 to T4). The light transmittance stated here indicates the total light transmittance Tt(%).

$$\text{Tt} = \text{T2} \ (\%) \qquad\qquad \ldots (4)$$

$$\text{Td} = \text{T4} - \text{T3} \ (\text{T2} / 100) \ (\%) \qquad \ldots (5)$$

$$\text{Tp} = \text{Tt} - \text{Td} \ (\%) \qquad\qquad \ldots (6)$$

As a resin material satisfying the methanol resistance (the mass rate of change, the length rate of change, and the thickness rate of change in the immersion test of the pure methanol) and the transparency (the light transmittance in the light transmittance measurement test), for example, polyethylene naphthalate (PEN), polyethylene terephthalate (PET), cyclic olefincopolymer (COC), cycloolefin polymer (COP), polymethylpentene (TPX), polyphenylsulfone (PPSU), and so on can be cited.

The mass rate of changes, the length rate of changes, and the thickness rate of changes in the immersion test of the pure methanol and the light transmittances in the light transmittance measurement test of these respective resin materials are shown in table 1.

Incidentally, values of an acrylic resin (PMMA) and polycarbonate (PC) as prototypes of a general transparent resin, and values of polypropylene (PP) as a prototype of a chemical resistant material are additionally shown in the table 1.

[Table 1]

| | | Methanol Resistance | | | Optical characteristics |
|---|---|---|---|---|---|
| | | Rate of mass change (%) | Rate of length change(%) | Rate of thickness change (%) | Light ray transmittance (%) |
| Example | PEN | 0.09 | 0.24 | 0.03 | 88 |
| | PET | 0.27 | -0.05 | 0.42 | 88 |
| | COC | 0.10 | -0.13 | 0.03 | 90 |
| | COP | 0.09 | 0.14 | -0.03 | 92 |
| | TPX | 0.22 | 0.19 | 0.01 | 90 |
| | PPSU | 0.18 | 0.20 | 0.04 | 86 |

(continued)

| | | Methanol Resistance | | | Optical characteristics |
|---|---|---|---|---|---|
| | | Rate of mass change (%) | Rate of length change(%) | Rate of thickness change (%) | Light ray transmittance (%) |
| Comparative Example | PMMA | 13.0 | 1.12 | 22.0 | 92 |
| | PC | 2.56 | 0.70 | 0.81 | 90 |
| | PP | 0.14 | 0.37 | 0.01 | 40 |

Further, practicalities of the fuel tank 3 manufactured by the above-stated respective resins are evaluated, for example, as stated below. Namely, an evaluation is performed in a form based on the chemical resistance test method for plastic according to JIS K7114, for the transparent tank manufactured by a molding. However, in case of the DMFC, the transparent tank holding the methanol fuel is heated by a heat generation when electricity is generated. With consideration of the above, the transparent tank is completely immersed in a test solution (the pure methanol with a concentration of 99.8%) at 50°C ± 2°C which is a severer condition than an actual device operating temperature, and it is left at rest for seven days while keeping the above-stated temperature.

After that, the transparent tank is pulled out of the test solution, rinsed in water, moisture adhered to a surface of the transparent tank is wiped off, and thereafter, a mass ($M2$), a length ($L2$), and a height ($T2$) after the test are measured. The length is an average value of the lengths of the transparent tank in a longitudinal direction and a lateral direction. As the height, the heights of five places which are a center portion and respective corner portions (10 mm inside from edges) of the transparent tank are measured.

The rate of mass change M and the rate of length change L are calculated based on the above-stated expression (1) and expression (2) from the mass ($M1$), the length ($L1$) before the test of the transparent tank and the mass ($M2$), the length ($L2$) after the test. Further, the changes of the heights at the five places are compared, and thereby, a presence/absence of an occurrence of warp of the transparent tank and a tendency of a warp direction when the warp occurs are grasped.

It is preferable that the fuel tank 3 has the rate of mass change of 0.3% or less and the rate of length change of 0.5% or less in the above-stated evaluation test of the practicality. As for the change (warp) of height, it is preferable that a minimum height portion and a maximum height portion fall within the rate of changes of 1 % compared to an average height of the five places. Incidentally, as a removal action of the warp, it is preferable to perform an annealing process in which heat is added up to a temperature slightly lower than a glass transition temperature of various resins, and then it is cooled down slowly. Accordingly, a residual stress at the molding time can be removed efficiently.

An environmental test similar to the above is performed as for a test of transparency. Namely, the transparent tank is completely immersed in the test solution (the pure methanol with a concentration of 99.8%) at 50°C ± 2°C, and it is left at rest for seven days while keeping the above-stated temperature. After that the total transmitted light amount is asked by using the integrating-sphere light transmittance measurement device attaching the standard white plate, in the light transmittance measurement test based on "the optical characteristics test method for plastic" according to JIS K7105 again. As a result, it is preferable that a rate of deterioration of the transmittance of the transparent tank is less than 1% compared to a value before the test.

As it is obvious from the table 1, the above-stated respective resins are superior in the methanol resistance and have fine transparency. According to the fuel tank 3 formed by the transparent resin having the characteristics as stated above, it is possible to maintain the practical durability and reliability of the fuel tank 3 in which the methanol fuel F is held. Further, it becomes possible to check the remaining amount of the methanol fuel F in the fuel tank 3 by the visual observation easily from outside for a long time. The transparent resin constituting the fuel tank 3 is particularly preferable to be at least one kind selected from polyethylene naphthalate (PEN), cyclic olefincopolymer (COC), and polyphenylsulfone (PPSU).

In this embodiment, the whole fuel tank 3 is integrally formed by the transparent resin, and therefore, it is possible to check the remaining amount of the methanol fuel F by the visual observation from any surface and any angle of the fuel tank 3. In FIG. 3, reference numeral 17 shows a casing of a device to which the passive type DMFC 1 including the fuel tank 3 is mounted. For example, a slit (not-shown) is provided at the device casing 17 so that it is possible to check the fuel remaining amount in the fuel tank 3 from outside. The slit of this device casing 17 may be formed anywhere as long as it is a portion where the fuel tank 3 exposes. Accordingly, it is possible to enhance a flexibility and so on of a design of the device casing 17 to which the DMFC 1 is mounted.

The fuel tank 3 is totally formed by the transparent resin, and therefore, it is possible to check the remaining amount in the tank of the methanol fuel F from any surface of the fuel tank 3. Further, in this embodiment, a prism 18 is provided in the fuel tank 3 so as to enhance the visibility (checkability) of the remaining amount in the tank. The prism 18 is provided so as to be in parallel with a tank surface 14a positioning in a visible direction (shown by an arrow A in the drawing) of the remaining amount in the tank. In this case, the slit (not-shown) and so on is provided at a surface 17a in the visible direction of the device casing 17.

It is possible to improve the visibility of the remaining amount of the methanol fuel F further more by providing the prism 18 in the fuel tank 3. Incidentally, it is preferable that the prism 18 is formed by the transparent resin having similar characteristics to the fuel tank 3, because the prism 18 is in contact with the methanol fuel F in the fuel tank 3. Namely, it is preferable that the prism 18 formed by the transparent resin having the methanol resistance and the transparency is provided in the fuel tank 3. The methanol resistance and the transparency of the transparent resin are the same as stated above.

Further, in this embodiment, the tank portion 14, the plural support posts 15, and the mounting portion 16 of the coupling mechanism constituting the fuel tank 3 are integrally formed by the transparent resin, and therefore, it is possible to manufacture the tank in a complicated shape with one mold. Namely, it is possible to decrease a manufacturing cost of the fuel tank 3 in various shapes. In addition, a possibility in which the methanol fuel F may leak does not exist such as a tank manufactured by combining different kinds of resin parts. As stated above, it becomes possible to provide the fuel tank 3 with high reliability in low cost.

The plural support posts 15 provided inside the fuel tank 3 are to support the fuel cell unit 2 and the gas permselective membrane 4. The plural support posts 15 are provided in the tank portion 14 if necessary. The coupling mechanism (a coupler and so on) with the fuel cartridge is provided at the mounting portion 16 of the coupling mechanism. The fuel cartridge is coupled to the fuel tank 3 via the coupling mechanism provided at the mounting portion 16, and the methanol fuel F is supplied from this fuel cartridge.

A moisture retention layer 19 is laminated on the cathode conductive layer 11 of the above-stated fuel cell unit 2, and a surface layer 20 is laminated further thereon. The surface layer 20 has a function to adjust an inlet amount of air being the oxidant, and the adjustment thereof is performed by changing the number, sizes and so on of air introducing ports 21 formed at the surface layer 20. The moisture retention layer 19 plays a role to suppress transpiration of water by impregnating a part of the water generated at the cathode catalyst layer 7, and also has a function to encourage a uniform diffusion of the oxidant to the cathode catalyst layer 7 by introducing the oxidant into the cathode gas diffusion layer 8 uniformly. The moisture retention layer 19 is constituted by, for example, a member having a porous structure, and a porous body and so on of polyethylene, polypropylene can be cited as concrete composing materials thereof.

The gas permselective membrane 4, the fuel cell unit 2, the moisture retention layer 19, the surface layer 20 are sequentially laminated on the fuel tank 3, and for example, a stainless steel cover 22 is covered from further thereon to hold all of them. The passive type DMFC 1 is constituted by the above. Openings are provided at portions of the cover 22 corresponding to the air introducing ports 21 formed on the surface layer 20. Incidentally, a terrace 23 receiving a caulking claw 22a of the cover 22 is provided at the fuel tank 3. All over the fuel tank 3 including the terrace 23 is integrally formed by the transparent resin.

In the passive type DMFC 1 having the above-stated configuration, the methanol fuel F in the fuel tank 3 is vaporized, and this vaporized component is supplied to the fuel cell unit 2 by permeating the gas permselective membrane 4. The vaporized component of the methanol fuel F is diffused by the anode gas diffusion layer 6 to be supplied to the anode catalyst layer 5 in the fuel cell unit 2. The vaporized component supplied to the anode catalyst layer 5 induces an internal reforming reaction of the methanol shown by an expression (7) described below.

$$CH_3OH + H_2O \rightarrow CO_2 + 6H^+ + 6e^- \qquad (7)$$

Incidentally, when the pure methanol is used as the methanol fuel F, vapor is not supplied from the fuel tank 3, and therefore, the internal reforming reaction shown by the expression (7) is induced by making the water generated at the cathode catalyst layer 7 and the water in the electrolyte membrane 9 react with the methanol. Otherwise, the internal reforming reaction is induced by the other reaction mechanisms which do not need water without depending on the internal reforming reaction of the above-stated expression (7).

Proton ($H^+$) generated by the internal reforming reaction is conducted through the electrolyte membrane 9 to reach the cathode catalyst layer 7. The air (oxidant) inlet from the air introducing ports 21 of the surface layer 20 diffuses the moisture retention layer 19, the cathode conductive layer 11, and the cathode gas diffusion layer 8, to be supplied to the cathode catalyst layer 7. The air supplied to the cathode catalyst layer 7 induces a reaction shown by the following expression (8). A power generation reaction accompanying the generation of water takes place by this reaction.

$$(3/2)O_2 + 6H^+ + 6e^- \rightarrow 3H_2O \qquad (8)$$

As the power generation reaction based on the above-stated reaction proceeds, the methanol fuel F in the fuel tank 3 is consumed. The remaining amount of the methanol fuel F in the fuel tank 3 can be checked by the visual observation from outside of the device casing 17 because the fuel tank 3 is formed by the transparent resin. Consequently, the methanol fuel F is supplied to the fuel tank 3 by coupling the fuel cartridge (not-shown), based on the checked result of the fuel remaining amount in the fuel tank 3. According to the passive type DMFC 1 as stated above, it is possible to stably provide the electric power to various portable devices and so on because a supply timing of the methanol fuel F can surely be checked.

Incidentally, in the above-stated embodiment, an example in which the direct methanol fuel cell (DMFC) of the present invention is applied to the passive type fuel battery is described, but the present invention is not limited to the above, and it is possible to apply to an active type fuel battery. However, in the passive type DMFC, the fuel tank is integrally laminated with the fuel cell unit as stated above, and therefore, the transparent resin having the methanol resistance as the composing material thereof functions more efficiently.

Industrial Applicability

According to a fuel battery of an aspect of the present invention, it is possible to perform a visual observation of a remaining amount of a methanol fuel in a fuel tank from outside in addition to adding practical durability to the fuel tank holding the methanol fuel. Accordingly, it is possible to provide a fuel battery in which reliability of the fuel tank and visibility of the fuel remaining amount are both improved.

**Claims**

1. A fuel battery, comprising:

   a fuel tank containing a methanol fuel as a liquid fuel, and formed by a transparent resin having methanol resistance; and
   an electromotive unit performing a power generation operation by being supplied with the methanol fuel from the fuel tank.

2. The fuel battery according to claim 1,
   wherein the transparent resin satisfies conditions of a rate of mass change of 0.3% or less, a rate of length change of 0.5% or less, and a rate of thickness change of 0.5% or less in an immersion test of a pure methanol based on JIS K7114.

3. The fuel battery according to claim 1,
   wherein a light transmittance of the transparent resin is 85% or more in a light transmittance measurement test based on JIS K7105.

4. The fuel battery according to claim 1,
   wherein the transparent resin is at least one selected from polyethylene naphthalate, polyethylene terephthalate, cyclic olefincopolymer, cycloolefin polymer, polymethylpentene, and polyphenylsulfone.

5. The fuel battery according to claim 1,
   wherein the transparent resin is at least one selected from polyethylene naphthalate, cyclic olefincopolymer, and polyphenylsulfone.

6. The fuel battery according to claim 1,
   wherein the electromotive unit has a fuel electrode, an oxidant electrode, and an electrolyte membrane sandwiched between the fuel electrode and the oxidant electrode.

7. The fuel battery according to claim 1, further comprising:

   a gas permselective membrane interposed between the fuel tank and the electromotive unit, and supplying a vaporized component of the methanol fuel to the fuel electrode.

8. The fuel battery according to claim 6,
   wherein the fuel tank has a box-shaped container in which a plane facing the fuel electrode of the electromotive unit is opened, and the whole box-shaped container is formed by the transparent resin.

**9.** The fuel battery according to claim 8,
wherein the fuel tank has a mounting portion of a coupling mechanism with a fuel cartridge, and the whole fuel tank including the mounting portion of the coupling mechanism is integrally formed by the transparent resin.

**10.** The fuel battery according to claim 8,
wherein the fuel tank has a support post stuck up inside thereof, and the whole fuel tank including the support post is integrally formed by the transparent resin.

**11.** The fuel battery according to claim 1,
wherein a prism is provided in the fuel tank.

**12.** The fuel battery according to claim 11,
wherein the prism is formed by the transparent resin having the methanol resistance.

# FIG. 1

# FIG. 2

# FIG. 3

## INTERNATIONAL SEARCH REPORT

| International application No. |
| --- |
| PCT/JP2006/313950 |

### A. CLASSIFICATION OF SUBJECT MATTER
$H01M8/04$(2006.01)i, $H01M8/06$(2006.01)i, $H01M8/10$(2006.01)i

According to International Patent Classification (IPC) or to both national classification and IPC

### B. FIELDS SEARCHED

Minimum documentation searched (classification system followed by classification symbols)
$H01M8/04$, $H01M8/06$, $H01M8/10$

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2000-268836 A (Sony Corp.),<br>29 September, 2000 (29.09.00),<br>Claims; Par. Nos. [0015], [0018]; Fig. 1<br>(Family: none) | 1-12 |
| Y | JP 2001-93551 A (Toshiba Corp.),<br>06 April, 2001 (06.04.01),<br>Claims; Par. No. [0048]<br>& US 6506513 B1 & EP 1087455 A2 | 1-12 |
| Y | JP 2004-335331 A (Fuji Photo Film Co., Ltd.),<br>25 November, 2004 (25.11.04),<br>Claims; Par. No. [0047]<br>(Family: none) | 1-12 |

☒ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 14 September, 2006 (14.09.06) | 26 September, 2006 (26.09.06) |

| Name and mailing address of the ISA/<br>Japanese Patent Office | Authorized officer |
| --- | --- |
| Facsimile No. | Telephone No. |

Form PCT/ISA/210 (second sheet) (April 2005)

**INTERNATIONAL SEARCH REPORT**

| International application No. |
| --- |
| PCT/JP2006/313950 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2005-38803 A  (Tokai Corp.),<br>10 February, 2005 (10.02.05),<br>Par. Nos. [0024], [0047]<br>& WO 2005/004268 A1 | 1-12 |
| Y | JP 2-234358 A  (Nippon Soken, Inc.),<br>17 September, 1990 (17.09.90),<br>Page 4, upper left column, lines 4 to 13;<br>Fig. 1<br>(Family: none) | 7 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3413111 B
- JP 2004171844 A
- JP 2001093551 A
- JP 2004335331 A